# EUROPÄISCHE PATENTANMELDUNG

(11) **EP 4 024 681 A1**
(43) Veröffentlichungstag der Anmeldung: **06.07.2022**
(21) Anmeldenummer: 20217889.3
(22) Anmeldetag: 30.12.2020
(51) Int. Cl.: H02K 15/02, H02K 1/06

(54) **VERFAHREN ZUR FERTIGUNG EINES STAPELS VON MAGNETBLECHEN FÜR EINEN ROTOR UND/ODER STATOR EINER ELEKTRISCHEN MASCHINE SOWIE VERFAHREN ZUR FERTIGUNG EINER ELEKTRISCHEN MASCHINE UND VERFAHREN ZUR FERTIGUNG EINER ANLAGE UND EINES FAHRZEUGS**

(71) Anmelder: Siemens Aktiengesellschaft, 80333 München (DE)
(72) Erfinder: Schuh, Carsten, 85598 Baldham (DE); Soller, Thomas, 94469 Deggendorf (DE); Vollmer, Rolf, 36129 Gersfeld (DE)

(57) **Zusammenfassung**

Bei dem Verfahren zur Fertigung eines Stapels von Magnetblechen für einen Rotor und/oder Stator einer elektrischen Maschine wird
- eine Mehrzahl von Magnetblechen herangezogen,
- je mindestens eine physikalische Eigenschaft je eines Magnetblechs der Mehrzahl erfasst,
- ein Sollwert für eine physikalische Größe des Stapels von Magnetblechen bestimmt
- und eine solche Stapelfolge von Magnetblechen der Mehrzahl ermittelt, welche eine Abweichung eines Istwert der physikalischen Größe des Stapels mit der ermittelten Stapelfolge vom mindestens einen Sollwert gegenüber Stapeln mit anderen Stapelfolgen von Magnetblechen der Mehrzahl verringert und es wird
- der Stapel mit der ermittelten Stapelfolge gestapelt. Bei dem Verfahren zur Fertigung einer elektrischen Maschine wird ein Rotor und/oder Stator mit einem Stapel von Magnetblechen gebildet, wobei der Stapel von Magnetblechen mit einem solchen Verfahren zur Fertigung eines Stapels von Magnetblechen gefertigt wird.
Bei dem Verfahren zur Fertigung einer Anlage und/oder eines Fahrzeugs wird zunächst eine elektrische Maschine mit einem Verfahren zur Fertigung einer elektrischen Maschine nach dem vorhergehenden Anspruch gefertigt und anschließend die Anlage oder das Fahrzeug mit der elektrischen Maschine versehen.

## Beschreibung

Die Erfindung betrifft ein Verfahren zur Fertigung eines Stapels von Magnetblechen für einen Rotor und/oder einen Stator einer elektrischen Maschine sowie ein Verfahren zur Fertigung einer elektrischen Maschine und ein Verfahren zur Fertigung einer Anlage und zur Fertigung eines Fahrzeugs.

Ein neues Verfahren zur Herstellung von Magnetblechen für elektrische Maschinen stellt der Sieb- und/oder Schablonendruck dar. Hierbei wird ausgehend von Metallpulvern zunächst eine Druckpaste erzeugt, welche dann mittels Sieb- und/oder Schablonendrucks zu einem Grünkörper, d. h. einer Dickschicht, verarbeitet wird. Anschließend wird der Grünkörper thermisch behandelt, d. h. entbindert und gesintert, und somit in ein metallisches, strukturiertes Magnetblech überführt.

Allerdings können beim Sieb- und Schablonendruck leicht derart störende Fertigungstoleranzen auftreten, dass die für den Betrieb einer elektrischen Maschine erforderlichen, betriebskritischen Spezifikationen nicht erreicht werden können. Solche Toleranzen können beispielsweise die geometrischen Abmessungen, die Dichte oder die Mikrostruktur und die Oberflächenbeschaffenheit betreffen. Auch die chemische Zusammensetzung sowie die magnetischen Eigenschaften der Magnetbleche können beim Sieb- und Schablonendruck nachteilig variieren.

Aufgabe der Erfindung ist es daher, ein verbessertes Verfahren zur Fertigung eines Stapels von Magnetblechen für einen Rotor und/oder einen Stator einer elektrischen Maschine anzugeben. Insbesondere soll das Verfahren eine Fertigung einer elektrischen Maschine mit verbesserten Eigenschaften als im Stand der Technik bekannt erlauben. Ferner ist es eine Aufgabe der Erfindung, ein verbessertes Verfahren zur Fertigung einer elektrischen Maschine und ein verbessertes Verfahren zur Fertigung einer Anlage und zur Fertigung eines Fahrzeugs anzugeben.

Diese Aufgabe der Erfindung wird mit einem Verfahren zur Fertigung eines Stapels von Magnetblechen für einen Rotor und/oder einen Stator einer elektrischen Maschine mit den in Anspruch 1 angegebenen Merkmalen sowie mit einem Verfahren zur Fertigung einer elektrischen Maschine mit den in Anspruch 14 angegebenen Merkmalen und mit einem Verfahren zur Fertigung einer Anlage und/oder eines Fahrzeugs mit den in Anspruch 15 angegebenen Merkmalen gelöst. Bevorzugte Weiterbildungen der Erfindung sind in den zugehörigen Unteransprüchen, der nachfolgenden Beschreibung und der Zeichnung angegeben.

Bei dem erfindungsgemäßen Verfahren zur Fertigung eines Stapels von Magnetblechen für einen Rotor und/oder Stator einer elektrischen Maschine wird eine Mehrzahl von Magnetblechen herangezogen und je mindestens eine physikalische Eigenschaft je eines Magnetblechs der Mehrzahl erfasst. Bei dem erfindungsgemäßen Verfahren wird ein Sollwert für eine physikalische Größe des Stapels von Magnetblechen bestimmt und es wird eine solche Stapelfolge von Magnetblechen der Mehrzahl ermittelt, welche eine Abweichung eines Istwert der physikalischen Größe des Stapels mit der ermittelten Stapelfolge vom mindestens einen Sollwert gegenüber Stapeln mit anderen Stapelfolgen von Magnetblechen der Mehrzahl verringert und der Stapel wird mit der ermittelten Stapelfolge gestapelt.

Mittels des erfindungsgemäßen Verfahrens kann vorteilhaft eine solche Abfolge von Magnetblechen bestimmt werden, welche einen Stapel mit einem Istwert der physikalischen Größe ermöglicht, welche einem Sollwert für die physikalische Größe des Stapels besonders nahekommt. Auf diese Weise können also betriebskritische Größen des Stapels und somit auch einer elektrischen Maschine, in welche ein solcher Stapel als Stator und/oder Rotor eingebaut wird, erreicht werden, obwohl die einzelnen Magnetbleche einer Fertigungstoleranz unterliegen. Insbesondere werden somit auch solche Fertigungsverfahren für Magnetbleche nutzbar, welche an sich, d. h. bei bekannten Fertigungsverfahren, aufgrund ihrer Fertigungstoleranzen nicht bei der Fertigung von Magnetblechen für elektrische Maschinen einsetzbar wären. Ferner lässt sich mittels des erfindungsgemäßen Verfahrens das Auftreten von Ausschuss deutlich reduzieren, da sich toleranzbehaftete Magnetbleche nutzen lassen, welche bei bekannten Verfahren als Ausschuss gegolten hätten.

Folglich lässt sich das erfindungsgemäße Verfahren mit gegenüber dem Stand der Technik verringerten Fehlleistungskosten und erhöhter Wahrscheinlichkeit des Erreichens einer erforderlichen Spezifikation einsetzen.

Soweit in der vorliegenden Anmeldung von einem "Stator und/oder Rotor einer elektrischen Maschine" die Rede ist, ist darunter ein "Stator und/oder Rotor für eine elektrische Maschine", d. h. "geeignet und vorzugsweise ausgebildet für die Verwendung in einer elektrischen Maschine", zu verstehen.

Zweckmäßig werden bei dem Verfahren gemäß der Erfindung die Magnetbleche der Mehrzahl zunächst mittels Sieb- und/oder Schablonendrucks gefertigt. Gerade beim Sieb- und/oder Schablonendruck von Magnetblechen für Statoren und/oder Rotoren für elektrische Maschinen treten regelmäßig Fertigungstoleranzen auf, sodass gerade in dieser Weiterbildung das erfindungsgemäße Verfahren einfach und zuverlässig eingesetzt werden kann.

Bevorzugt umfasst die mindestens eine physikalische Eigenschaft eines Magnetblechs eine oder mehrere geometrische Abmessungen des Magnetblechs, insbesondere einen äußeren und/oder inneren Durchmesser des Magnetblechs, und/oder eine oder mehrere der nachfolgend genannten physikalischen Eigenschaften: eine Dichte des Magnetblechs und/oder eine Mikrostruktur und/oder eine chemische Zusammensetzung und/oder eine Topographie und/oder eine Wärmeleitfähigkeit und/oder eine oder mehrere mechanische Eigenspannungen des Magnetblechs und/oder eine oder mehrere magnetische Eigenschaften des Magnetblechs, insbesondere eine Sättigungsfeldstärke und/oder eine Koerzitivfeldstärke und/oder eine Remanenz und/oder eine Hysterese, vorzugsweise einen Verlauf einer Hysteresekurve des Magnetblechs.

Bevorzugt umfasst bei dem erfindungsgemäßen Verfahren der Sollwert für die physikalische Größe eine oder mehrere geometrische Abmessungen des Stapels von Magnetblechen und/oder eine oder mehrere der nachfolgend genannten physikalischen Größen: eine Gesamtdichte des Stapels und/oder eine Varianz geometrischer Abmessungen des Stapels, vorzugsweise quer zur Stapelrichtung, und/oder eine oder mehrere magnetische Eigenschaften des Stapels, insbesondere eine magnetische Sättigungsfeldstärke und/oder Parameter einer Hysteresekurve, vorzugsweise eine Koerzitivfeldstärke und/oder eine Remanenz des Stapels.

Bei dem Verfahren gemäß der Erfindung wird die Stapelfolge für eine echte Teilmenge der Mehrzahl von Magnetblechen ermittelt. Auf diese Weise können Magnetbleche, welche hinsichtlich ihrer gemessenen physikalischen Eigenschaften generell, d.h. nicht lediglich an einer bestimmten Stelle der Kandidatenabfolge, nicht für den Aufbau des Stapels geeignet sind, von der Fertigung des Stapels ausgeschlossen werden. Ferner können alternativ oder zusätzlich auch geeignete Magnetbleche, etwa aus früheren Fertigungslosen, eingesetzt werden. Zudem vorteilhaft kann die Kandidatenabfolge abschnittsweise ermittelt werden und der Stapel abschnittsweise zusammengesetzt werden, indem die Abschnitte aufeinander gestapelt werden.

Bei dem erfindungsgemäßen Verfahren wird die Stapelfolge zweckmäßig ermittelt, indem zunächst zumindest zwei oder mehrere Kandidatenstapelfolgen für eine Stapelfolge bestimmt werden und Istwerte der Kandidatenstapelfolgen mit dem Sollwert verglichen werden und diejenige Kandidatenstapelfolge als Stapelfolge ermittelt wird, deren Istwert am geringsten vom Sollwert abweicht. Dabei kann grundsätzlich nach einer Vielzahl von Algorithmen vorgegangen werden. So können etwa zunächst Magnetbleche einer Kandidatenstapelfolge einander umso näher vorgesehen werden, umso ähnlicher ihre physikalischen Eigenschaften sind. In weiteren Ansätzen kann eine Kandidatenabfolge zunächst hinsichtlich einer einzigen physikalischen Eigenschaft isoliert optimiert werden. Nachträglich kann der Kandidatenstapel dann zunehmend variiert werden, bis sich der Istwert der physikalischen Größe des Stapels dem Sollwert der physikalischen Größe zunehmend annähert.

Besonders bevorzugt erfolgt bei dem Verfahren gemäß der Erfindung die Ermittlung der Stapelfolge mittels künstlicher Intelligenz. Vorzugsweise wird dazu ein neuronales Netz herangezogen, welches die gemessenen, d. h. erfassten, physikalischen Eigenschaften der Magnetbleche als Eingangsdaten erhält und als Optimierungskriterium die Abweichung des Istwerts vom Sollwert enthält. Das neuronale Netz wird zuvor anhand einer Vielzahl simulierter physikalischer Eigenschaften von Magnetblechen oder anhand einer Vielzahl physikalischer Eigenschaften tatsächlicher Magnetbleche trainiert.

Bei dem erfindungsgemäßen Verfahren wird bevorzugt eine geometrische Gestalt des Stapels erfasst und eine geometrische Gestalt einer Stapelhilfe ermittelt, mittels welcher die Magnetbleche in der ermittelten Stapelfolge stapelbar sind. Zweckmäßig weist die Stapelhilfe eine mit der Form der Magnetbleche korrespondierende Form auf. Vorzugsweise wird die Stapelhilfe zur Stapelung von Magnetblechen für einen Stator herangezogen, wobei die Magnetbleche für den Stator eine zentrale Durchführung aufweisen, in welche Zähne der Magnetbleche radial in die Durchführung einragen. Zweckmäßig weist die Stapelhilfe einen zentralen zylindrischen Grundkörper auf, von welchem sich radial Speichen, welche mit den zwischen den Zähnen der Magnetbleche liegenden Zwischenräumen korrespondieren, fortstrecken. Auf diese Weise können Magnetbleche auf die Stapelhilfe aufgeschoben werden, sodass die Magnetbleche in der zur Bildung des Stators vorhergesehenen Orientierung und Positionierung anordenbar sind.

Vorzugsweise werden bei dem Verfahren gemäß der Erfindung Anpassungs- und/oder Austauschelemente zur Anpassung des Istwerts an den Sollwert vorgesehen und es wird die Stapelfolge unter Berücksichtigung der Anpassungs- und/oder Austauschelemente derart ermittelt, dass zunächst eine Abweichung eines Istwert der physikalischen Größe des Stapels mit der ermittelten Stapelfolge mit den Anpassungs- und/oder Austauschelementen von dem mindestens einen Sollwert verringert wird. Zweckmäßig wird bei dem Verfahren zunächst eine initiale Stapelfolge ermittelt und dann werden die Anpassungs- und/oder Austauschelemente vorgesehen. Nachfolgend wird dann eine endgültige Stapelfolge zur Fertigung ermittelt.

Bevorzugt werden bei dem erfindungsgemäßen Verfahren die Anpassungs- und/oder Austauschelemente mittels additiver Fertigungsverfahren gefertigt. Zweckmäßig umfasst die additive Fertigung Selective Laser Melting und/oder Laser Metal Deposition und/oder Wire Arc Additive Manufacturing und/oder Fused Deposition Modeling und/oder Stereolithographie und/oder Sieb- und/oder Schablonendruck und/oder Sprüh- und/oder Schlickergussverfahren und/oder Folienziehen. Idealerweise werden die Anpassungs- und/oder Austauschelemente mit, idealerweise aus, Metall und/oder Materialien der Magnetbleche gefertigt.

Bei dem Verfahren gemäß der Erfindung wird die Stapelhilfe vorzugsweise mittels additiver Fertigung gefertigt und der Stapel mittels der Stapelhilfe gestapelt. Zweckmäßig umfasst die additive Fertigung dabei Selective Laser Melting und/oder Laser Metal Deposition und/oder Wire Arc Additive Manufacturing und/oder Fused Deposition Modeling und/oder Stereolithographie und/oder Sieb- und/oder Schablonendruck und/oder Sprüh- und/oder Schlickergussverfahren und/oder Folienziehen. Bei dem erfindungsgemäßen Verfahren werden die Magnetbleche bevorzugt gestapelt und miteinander verpresst, d. h. die Magnetbleche werden zunächst sämtlich oder eine Untermenge der Magnetbleche, welche drei oder mehr Magnetbleche umfasst, wird sämtlich gestapelt und anschließend gemeinsam miteinander im Verbund verpresst.

Alternativ oder zusätzlich können bei dem Verfahren gemäß der Erfindung die Magnetbleche abwechselnd gestapelt und miteinander verpresst werden, d. h. es wird jeweils ein Magnetblech dem Stapel zugefügt und jeweils mit dem übrigen Stapel verpresst.

Bei dem erfindungsgemäßen Verfahren zur Fertigung einer elektrischen Maschine wird oder werden ein Rotor und/oder ein Stator mit einem Stapel von Magnetblechen gebildet, wobei der Stapel von Magnetblechen mit einem erfindungsgemäßen Verfahren zur Fertigung eines Stapels von Magnetblechen für einen Rotor und/oder Stator einer elektrischen Maschine wie zuvor beschrieben gefertigt wird. Auf diese Weise kann eine elektrische Maschine mit vorgegebener Spezifikation auch mittels neuer Fertigungstechniken wie insbesondere Sieb- und/oder Schablonendruck gefertigt werden.

Bei dem erfindungsgemäßen Verfahren zur Fertigung einer Anlage und/oder eines Fahrzeugs wird zunächst eine elektrische Maschine mit einem Verfahren zur Fertigung einer elektrischen Maschine nach dem vorhergehenden Anspruch gefertigt und anschließend wird die Anlage oder das Fahrzeug mit der elektrischen Maschine versehen. Zweckmäßig wird die elektrische Maschine in einer Antriebseinheit der Anlage und/oder des Fahrzeugs vorgesehen, d. h. angeordnet. Mittels des erfindungsgemäßen Verfahrens kann vorteilhaft eine Anlage und/oder ein Fahrzeug auch mit mittels neuer Fertigungstechniken wie insbesondere Sieb- und/oder Schablonendruck gefertigter Motoren realisiert werden.

Nachfolgend wir die Erfindung anhand eines in der Zeichnung dargestellten Ausführungsbeispiels näher erläutert. Es zeigen:
- Fig. 1: einen Stapel von Magnetblechen bei einer Ausführung eines erfindungsgemäßen Verfahrens zur Fertigung eines Stapels von Magnetblechen für einen Rotor und/oder Stator einer elektrischen Maschine schematisch im Querschnitt,
- Fig. 2: ein schematisches Ablaufdiagramm des erfindungsgemäßen Verfahrens zur Fertigung des Stapels von Magnetblechen gem. Fig. 1 in einer Prinzipskizze,
- Fig. 3: den Stapel von Magnetblechen gem. Fig. 1 schematisch in einer Draufsicht sowie

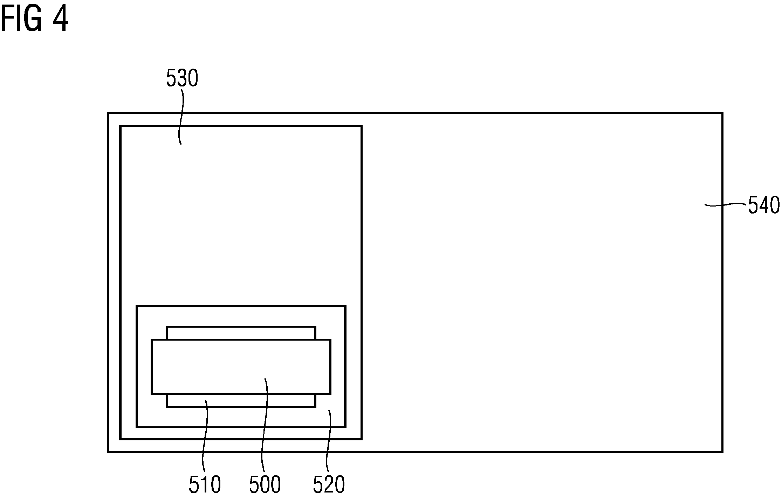

- Fig. 4: eine erfindungsgemäß gefertigte Anlage mit einer elektrischen Maschine mit einem mit dem erfindungsgemäßen Verfahren gem. Fig. 2 gefertigten Rotor und einem mit dem erfindungsgemäßen Verfahren gem. Fig. 2 gefertigten Stator mit dem Stapel von Magnetblechen gem. Fig. 1 schematisch in einer Prinzipskizze.

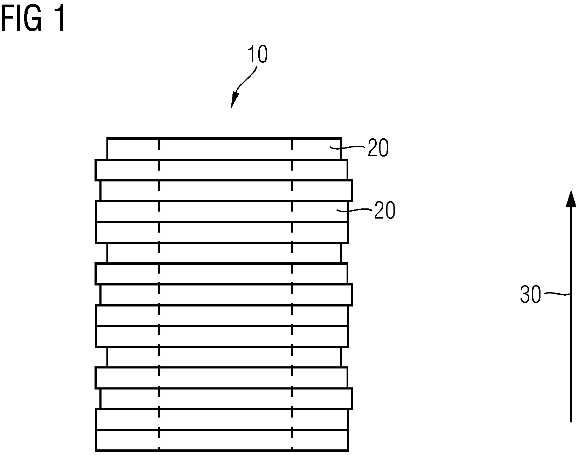

Der in Fig. 1 dargestellte Stapel 10 von Magnetblechen 20 bildet einen Stator einer elektrischen Maschine. Die auf den Stator bezogenen Ausführungen in dieser Beschreibung gelten in entsprechender Weise auch für einen Rotor der elektrischen Maschine.

Die Magnetbleche 20 des Stapels 10 sind mittels einer Sieb- und/oder Schablonendruck-Technologie gefertigte Siebdruckteile. Dazu sind die Magnetbleche 20 des Stapels 10 mittels Drucks einer Metallpaste und anschließenden Sinterns gefertigt.

Als Siebdruckteile weisen die Magnetbleche 20 des Stapels 10 eine nennenswerte Varianz in ihren physikalischen Eigenschaften auf. Insbesondere variieren die geometrischen Abmessungen der Magnetbleche 20 infolge einer nicht völlig kontrollierbaren Sinterschwindung. Beispielsweise variiert der äußere Durchmesser der Magnetbleche 20, wie es in Fig. 1 stark überzeichnet gezeigt ist. Weitere physikalische Eigenschaften der Magnetbleche 20, welche von einem gefertigten Magnetblech 20 zum nächsten gefertigten Magnetblech 20 variieren, sind die Dichte der Magnetbleche 20, eine Mikrostruktur sowie eine chemische Zusammensetzung und eine Topographie und eine Wärmeleitfähigkeit und mechanische Eigenspannungen der Magnetbleche 20. Zudem variieren von Magnetblech 20 zu Magnetblech 20 die magnetischen Eigenschaften der Magnetbleche 20. Im gezeigten Ausführungsbeispiel variieren eine Sättigungsfeldstärke sowie eine Koerzitivfeldstärke und eine Hysterese, beispielsweise ein Verlauf einer Hysteresekurve, der Magnetbleche 20.

Die Magnetbleche 20 sind in einer Stapelrichtung 30 zum Stapel 10 gestapelt. Zum Aufbau des Stapels 10 ergibt sich als Freiheitsgrad zum einen eine Abfolge der Magnetbleche 20 entlang der Stapelrichtung 30 aufeinander. Zum anderen umfasst im gezeigten Ausführungsbeispiel die Menge der Magnetbleche 20, welche für die Stapelung zum Stapel 10 zur Verfügung steht, eine größere Anzahl von Magnetblechen 20 als die Anzahl von Magnetblechen 20, welche für den Aufbau des Stators erforderlich sind. Aus der zur Verfügung stehenden Menge der Magnetbleche 20 können zum Aufbau des Stapels 10 also Magnetbleche 20 ausgewählt werden.

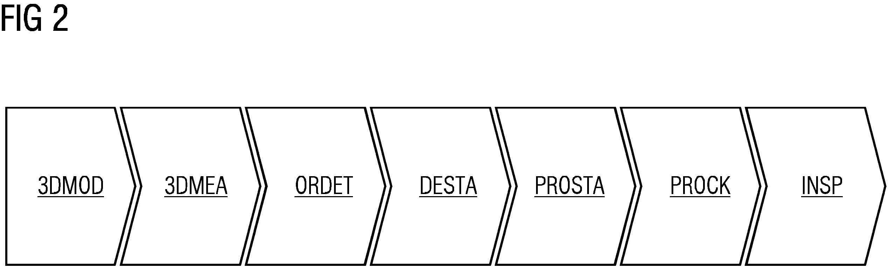

Fig. 2 detailliert das erfindungsgemäße Verfahren zur Fertigung des Stapels 10:
Zunächst wird mittels einer auf einem Rechner ablaufenden Modellierungssoftware ein Modell eines Stapels von idealen, d. h. simulierten oder modellierten, Magnetblechen generiert 3DMOD, welches einen Sollaufbau des Stapels zur Bildung des Stators bildet. Mittels der Modellierungssoftware wird aus dem Sollaufbau des Stapels eine physikalische Größe des Stapels als Sollwert bestimmt. Im gezeigten Ausführungsbeispiel umfasst die physikalische Größe des Stapels eine Gesamtdichte des Stapels 10 sowie eine Varianz geometrischer Abmessungen des Stapels 10 quer zur Stapelrichtung 30 und magnetische Eigenschaften des Stapels 10, hier einer magnetischen Sättigungsfeldstärke und Parameter einer Hysteresekurve, nämlich einer Koerzitivfeldstärke sowie einer Remanenz. Die physikalische Größe liegt also in Gestalt eines Vektors vor, d.h. die Sollgröße ist ein Vektor mehrerer physikalischer Größen und der Sollwert ist eine vektorielle Größe.

Zudem werden sämtliche Magnetbleche 20, welche für einen Aufbau des Stapels 10 zur Verfügung stehen, vermessen 3DMEA. Anhand einer optischen Vermessung mittels einer Kamera wird die äußere Geometrie der Magnetbleche 20, d.h. ihre geometrischen Abmessungen, mittels Bilderkennung individuell vermessen. Mithilfe einer Wärmequelle und eines Temperatursensors, etwa einer Wärmebildkamera, wird jeweils die Wärmeleitfähigkeit der Magnetbleche 20 individuell vermessen. Zudem wird die Dichte der einzelnen Magnetbleche 20 vermessen, indem die einzelnen Magnetbleche 20 gewogen werden und das Volumen der Magnetbleche anhand der geometrischen Abmessungen bestimmt wird. Alternativ kann das Volumen der Magnetbleche auch individuell anhand einer Flüssigkeitsverdrängung bestimmt werden. Ferner wird jedes einzelne Magnetblech 20 hinsichtlich seiner magnetischen Eigenschaften, hier der magnetischen Sättigungsfeldstärke und einer Koerzitivfeldstärke, der Magnetbleche 20 vermessen, indem die Magnetbleche 20 einem Magnetfeld ausgesetzt und jeweils einer Messung des Verlaufs einer Hysteresekurve des Magnetblechs 20 unterzogen werden.

Zudem werden anhand von licht- und/oder elektronen-optischer Abtastungen und Streumessungen die Topographie der Magnetbleche 20 sowie die chemische Zusammensetzung und die Mikrostruktur der Magnetbleche 20 vermessen. Dabei kann eine Bestimmung der chemischen Zusammensetzung und eine Erfassung der Mikrostruktur der Magnetbleche 20 mittels künstlicher Intelligenz erfolgen, indem ein neuronales Netz herangezogen wird, welches anhand von Bilddaten von Magnetblechen trainiert ist, deren chemische Zusammensetzung und Mikrostruktur bekannt sind. Ferner werden mechanische Eigenspannungen der Magnetbleche 20 mittels digitaler Bildkorrelation ermittelt, wobei alternativ oder zusätzlich auch weitere bekannte Verfahren zur Ermittlung von Eigenspannungen Einsatz finden können.

Es werden nun Kandidatenstapel mit mehreren Abfolgen der tatsächlich vorhandenen Magnetbleche 20 der Mehrzahl als Kandidatenabfolgen vorbestimmt. Für die mehreren Kandidatenabfolgen werden anhand der gemessenen physikalischen Eigenschaften die sich ergebenden physikalischen Größen der Kandidatenstapel mit der Modellierungssoftware als Istwerte simuliert. Es wird derjenige Kandidatenstapel ausgewählt ORDET, dessen physikalische Größe vom Sollwert des Sollaufbaus des Stapels 10 eine möglichst geringe Abweichung aufweist. Da es sich bei der physikalischen Größe um eine vektorielle Größe handelt, wird eine Abweichung mittels eines geeigneten Abstandsmaßes der vektoriellen Größen, also jeweils vom Sollwert und vom Istwert, voneinander ermittelt, etwa eine Quadratsumme der Differenzen der Einzelwerte der vektoriellen Größen oder eine Betragssumme der Differenzen der Einzelwerte der vektoriellen Größen. Nachdem der Kandidatenstapel mit der geringsten Abweichung des Istwerts vom Sollwert ausgewählt ORDET ist, wird die Kandidatenstapelfolge als Stapelfolge des Stapels 10 festgelegt DESTA.

In weiteren, nicht eigens dargestellten Ausführungsbeispielen, welche im Übrigen dem dargestellten Ausführungsbeispiel entsprechen, wird die Stapelfolge für eine echte Teilmenge der Mehrzahl von Magnetblechen ermittelt. Auf diese Weise können Magnetbleche 20, welche hinsichtlich ihrer gemessenen physikalischen Eigenschaften generell, d.h. nicht lediglich an einer bestimmten Stelle der Kandidatenabfolge, nicht für den Aufbau des Stapels 10 geeignet sind, von der Fertigung des Stapels 10 ausgeschlossen werden. Diese Magnetbleche 20 bilden folglich Ausschuss.

In weiteren, nicht eigens dargestellten Ausführungsbeispielen, welche im Übrigen dem dargestellten Ausführungsbeispiel entsprechen, werden die Kandidatenabfolgen mittels künstlicher Intelligenz ermittelt. Dazu wird ein neuronales Netz (nicht in der Zeichnung dargestellt) herangezogen, welches die gemessenen physikalischen Eigenschaften der Magnetbleche 20 als Eingangsdaten erhält und als Optimierungskriterium die Abweichung des Istwerts vom Sollwert implementiert. Das neuronale Netz wird zuvor anhand einer Vielzahl simulierter physikalischer Eigenschaften von Magnetblechen 20 trainiert.

Dazu wird im gezeigten Ausführungsbeispiel eine Stapelhilfe 50 gefertigt PROSTA, mittels welcher die Magnetbleche 20 zum ausgewählten Kandidatenstapel gestapelt werden können.

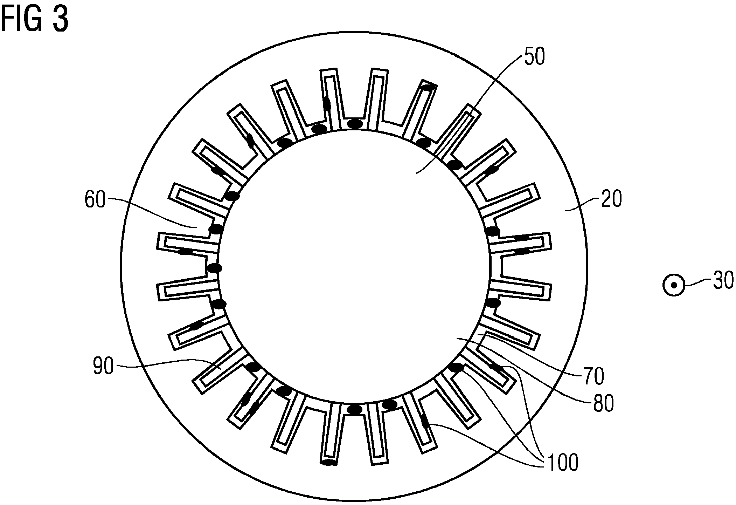

Die Stapelhilfe 50 ist in ihrer Form an die Form der Magnetbleche 20 angepasst. Stapelhilfe und Magnetbleche 20 sind in Fig. 3 näher detailliert:
Die Magnetbleche 20 weisen in der Ebene quer zur Stapelrichtung 30 eine Gestalt eines Kreisrings auf, von welchem sich Zähne 60 in Richtung eines Mittelpunkts des Kreisrings radial nach innen fortstrecken. Dabei enden die Zähne 60 in radialer Richtung einwärts auf einem gedachten Kreis, der den Mittelpunkt des Kreisrings konzentrisch umgibt. Die Zähne 60 enden somit an einer zentralen Durchführung 70, in welcher ein Rotor der elektrischen Maschine angeordnet werden kann.
Die Stapelhilfe 50 weist eine hierzu korrespondierende Gestalt auf, sodass die Stapelhilfe 50 durch die Durchführung 70 der Magnetbleche 20 hindurchgeführt werden kann. Die Stapelhilfe 50 weist einen zylindrischen Grundkörper 80 auf, von welchem sich Speichen 90 radial nach außen und senkrecht zu einer Längsmittelachse, welche die Symmetrieachse des zylindrischen Grundkörpers bildet, fortstrecken. Die Speichen 90 korrespondieren mit Zwischenräumen der Zähne 60 der Magnetbleche 20, sodass die Speichen 90 zwischen den Zähnen 60 anordenbar sind. Dabei weisen die Speichen 90 derart geringe umfängliche Abmessungen auf, dass die Speichen 90 trotz individueller Abweichungen aufgrund von Fertigungstoleranzen zwischen den Zähnen 60 jedes Magnetblechs anordenbar sind.

Da der ausgewählte Kandidatenstapel nicht idealisierte Magnetbleche, sondern konkret vermessene Magnetbleche 20 umfasst, weisen die Magnetbleche 20 durch Fertigungstoleranzen bedingte geometrische Abweichungen voneinander auf. Die in der Kandidatenabfolge des ausgewählten Kandidatenstapels jeweils vorgesehenen Magnetbleche 20 können nun in Position und Ausrichtung derart im Kandidatenstapel festgelegt werden, indem die Stapelhilfe 50 an demjenigen Abschnitt, an welchem das Magnetblech 20 vorgesehen ist, an die individuelle Form des Magnetblechs 20 angepasst ist. Dies kann etwa durch additiv gefertigte Anformungen 100, etwa in Form von passend dimensionierten Stegen, welche sich zumindest auch in Stapelrichtung 30 erstrecken und sich je vorzugsweise kontinuierlich entlang der Stapelrichtung 30 verbreitern oder verjüngen, an den Speichen 90, etwa in radialer und/oder umfänglicher Richtung, oder durch Anformungen 100 an einer zylindrischen Mantelfläche des zylindrischen Grundkörpers 80 erfolgen. Solche Anformungen 100 an den Speichen 90 oder an der zylindrischen Mantelfläche können mittels additiver Fertigungsverfahren an einer Stapelhilfe aufgetragen werden. Mithin wird die Stapelhilfe 50 infolge der Anformungen 100 an die ausgewählte Kandidatenabfolge maßgeschneidert angepasst. Grundsätzlich können die Anformungen 100 der Stapelhilfe 50 mittels additiver Fertigung gefertigt sein, etwa Selective Laser Melting und/oder Laser Metal Deposition und/oder Wire Arc Additive Manufacturing und/oder Fused Deposition Modeling und/oder Stereolithographie und/oder Sieb- und/oder Schablonendruck und/oder Sprüh- und/oder Schlickergussverfahren und/oder Folienziehen. Idealerweise werden die Anformungen 100 mit, idealerweise aus, Metall und/oder Materialien der Magnetbleche 20 gefertigt.

In weiteren, nicht eigens dargestellten Ausführungsbeispielen, welche im Übrigen dem dargestellten Ausführungsbeispiel entsprechen, wird die Stapelhilfe 50 nicht neu zu diesem Zweck angefertigt, sondern es wird eine bereits mit Anformungen 100 versehene Stapelhilfe 50 herangezogen, welche schon in früheren Ausführungen des erfindungsgemäßen Verfahrens Verwendung gefunden hat. Die Anpassung erfolgt in diesen Ausführungsbeispielen derart, dass die Anformungen 100, soweit diese für die aktuelle Kandidatenabfolge entbehrlich sind, subtraktiv entfernt oder in ihrer Abmessung verringert werden und soweit neue Anformungen 100 benötigt werden, diese additiv an der Stapelhilfe 50 angeordnet werden.

Mittels der Stapelhilfe 50 wird nun der Stapel 10 mit Magnetblechen 20 gestapelt PROCK und anschließend werden die Magnetbleche 20 des Stapels 10 mittels Druckstempel, welche parallel zur Stapelrichtung 30 und auf den Stapel 10 zu gerichtet Druck auf den Stapel 10 ausüben, miteinander verpresst und anschließend vergossen. Somit ist der Stapel 10 von Magnetblechen 20 nicht ohne Weiteres lösbar zu einem Verbund von Magnetblechen 20 verbunden.

In weiteren, nicht eigens dargestellten Ausführungsbeispielen, welche im Übrigen dem dargestellten Ausführungsbeispiel entsprechen, wird der Stapel 10 von Magnetblechen ohne eine Stapelhilfe 50 aufgebaut, indem jeweils ein Magnetblech 20 auf den bislang fertiggestellten Stapel 10 in Stapelrichtung 30 aufgelegt wird und jeweils mit dem übrigen Stapel 10 verpresst wird. So wird mit sämtlichen Magnetblechen 20 des Stapels 10 verfahren, bis der Stapel 10 fertiggestellt ist. Anschließend wird der Stapel 10 vergossen.

Abschließend wird der Stapel 10 mit Magnetblechen 20 einer Inspektion INSP unterzogen. Bei der Inspektion INSP wird die Sollgröße, d.h. der Vektor der mehreren physikalischen Größen, des aufgebauten Stapels 10 vermessen, d. h. es werden die Gesamtdichte des Stapels 10 und die Varianz geometrischer Abmessungen des Stapels 10 quer zur Stapelrichtung 30 und magnetische Eigenschaften des Stapels 10, hier die magnetische Sättigungsfeldstärke und Parameter einer Hysteresekurve, nämlich die Koerzitivfeldstärke sowie die Remanenz, gemessen.

Wenn die Sollgröße des aufgebauten Stapels 10 von dem vorab definierten Sollwert weniger abweicht, als es einer vorab festgelegten Grenzabweichung entspricht, so gilt der Stapel 10 als geeignet für den Aufbau eines Stators 510.

In weiteren, nicht eigens dargestellten Ausführungsbeispielen, welche im Übrigen den zuvor beschriebenen Ausführungsbeispielen entsprechen, wird dann, wenn die Sollgröße stärker abweicht, als es der Grenzabweichung entspricht, mittels einer digitalen Simulation ausprobiert, ob eine nachträgliche Fertigung einzelner oder weniger, etwa von höchstens 5 Prozent, der Magnetbleche 20 und dem Austausch der entsprechenden Magnetbleche 20 des Stapels 10 zu einer geringeren Abweichung des Stapels 10 führen könnte. Falls dies der Fall ist, werden die Magnetbleche 20 entsprechend ausgetauscht, bevor sie verpresst und vergossen werden und der Stapel 10 mit den ausgetauschten Magnetblechen 20 gestapelt. Grundsätzlich kann die so ermittelte Kandidatenstapelfolge des Stapels 10 zudem weiter optimiert werden, bevor der Stapel 10 endgültig gestapelt wird. Die ausgetauschten Magnetbleche können mittels additiver Fertigung gefertigt sein, etwa mittels additiver Fertigung wie insbesondere Selective Laser Melting und/oder Laser Metal Deposition und/oder Wire Arc Additive Manufacturing und/oder Sieb- und/oder Schablonendruck und/oder Sprüh- und/oder Schlickergussverfahren und/oder Folienziehen. Idealerweise werden die ausgetauschten Magnetbleche mit, idealerweise aus, Metall und/oder Materialien der übrigen Magnetbleche 20 gefertigt.

In weiteren, nicht eigens dargestellten Ausführungsbeispielen, welche im Übrigen den zuvor beschriebenen Ausführungsbeispielen entsprechen, wird zur weiteren Optimierung, d. h. zur Annäherung der Sollgröße an den Sollwert, anhand einer digitalen Simulation ausprobiert, ob additive Anformungen an einzelnen Magnetblechen 20 zur einer Verbesserung des Stapels 10 führen. In diesen Ausführungsbeispielen wird, bevor der Stapel 10 mit der Kandidatenabfolge aufgebaut wird, mittels digitaler Simulation geprüft, ob additive Anformungen an einzelnen, etwa höchstens 5 Prozent, der Magnetbleche 20 zu einer Annäherung des Istwerts der digitalen Simulation des Stapels 10 an den Sollwert führen würden. Wird eine solche Annäherung festgestellt, so werden die Magnetbleche 20 mittels additiver Fertigung, etwa mittels Laserauftragsschweißens, jeweils mit solchen Anformungen versehen und der Stapel 10 anschließend gestapelt. Grundsätzlich kann die Kandidatenabfolge der Magnetbleche 20 mit den versehenen Anformungen weiter optimiert werden, sodass noch eine bessere Kandidatenabfolge aufgefunden werden kann.

Die Anformungen der Magnetbleche 20 können mittels additiver Fertigung gefertigt sein, etwa Selective Laser Melting und/oder Laser Metal Deposition und/oder Wire Arc Additive Manufacturing und/oder Sieb- und/oder Schablonendruck und/oder Sprüh- und/oder Schlickergussverfahren und/oder Folienziehen. Idealerweise werden die Anformungen mit, idealerweise aus, Metall und/oder Materialien der Magnetbleche 20 gefertigt.

Zum Aufbau des Stators 510 wird der Stapel 10 in an sich bekannter Weise mit elektrischen Spulen (in der Zeichnung nicht explizit dargestellt) zum Aufbau eines magnetischen Stator-Feldes versehen, indem diese Spulen um die Zähne 60 der Magnetbleche 20 des Stapels 10 gewickelt werden.

In den so aufgebauten Stator 510 wird in an sich bekannter Weise ein mittels des erfindungsgemäßen Verfahrens zur Fertigung eines Stapels von Magnetblechen gefertigter Rotor 500 eingebracht, sodass Stator 510 und Rotor 500 gemeinsam einen elektrischen Motor 520 bilden.

Der Motor 520 wird in an sich bekannter Weise in eine Antriebseinrichtung 530 einer Anlage 540 oder eines Elektrofahrzeugs eingebaut.

## Patentansprüche

1. Verfahren zur Fertigung eines Stapels (10) von Magnetblechen (20) für einen Rotor (500) und/oder Stator (510) einer elektrischen Maschine (520), bei welchem
- eine Mehrzahl von Magnetblechen (20) herangezogen wird,
- je mindestens eine physikalische Eigenschaft je eines Magnetblechs (20) der Mehrzahl erfasst wird,
- ein Sollwert für eine physikalische Größe des Stapels (10) von Magnetblechen (20) bestimmt wird
- und eine solche Stapelfolge von Magnetblechen (20) der Mehrzahl ermittelt wird, welche eine Abweichung eines Istwert der physikalischen Größe des Stapels (10) mit der ermittelten Stapelfolge vom mindestens einen Sollwert gegenüber Stapeln (10) mit anderen Stapelfolgen von Magnetblechen (20) der Mehrzahl verringert und
- der Stapel (10) mit der ermittelten Stapelfolge gestapelt wird.

2. Verfahren nach dem vorhergehenden Anspruch, bei welchem die Magnetbleche (20) der Mehrzahl zunächst mittels Sieb- und/oder Schablonendrucks gefertigt werden.

3. Verfahren nach einem der vorhergehenden Ansprüche, bei welcher die mindestens eine physikalische Eigenschaft eines Magnetblechs (20) eine oder mehrere geometrische Abmessungen des Magnetblechs (20), insbesondere ein äußerer und/oder innerer Durchmesser des Magnetblechs (20), ist oder sind und/oder eine oder mehrere der nachfolgend genannten physikalischen Eigenschaften umfasst: eine Dichte des Magnetblechs (20) und/oder eine Mikrostruktur und/oder eine chemische Zusammensetzung und/oder eine Topographie und/oder eine Wärmeleitfähigkeit und/oder eine oder mehrere mechanische Eigenspannungen des Magnetblechs (20) und/oder eine oder mehrere magnetische Eigenschaften des Magnetblechs (20), insbesondere eine Sättigungsfeldstärke und/oder eine Koerzitivfeldstärke und/oder eine Remanenz und/oder eine Hysterese, vorzugsweise ein Verlauf einer Hysteresekurve, des Magnetblechs (20).

4. Verfahren nach einem der vorhergehenden Ansprüche, bei welchem der Sollwert für die physikalische Größe eine oder mehrere geometrische Abmessungen des Stapels (10) von Magnetblechen (20) umfasst und/oder eine oder mehrere der nachfolgend genannten physikalischen Größen umfasst: eine Gesamtdichte des Stapels (10) und/oder eine Varianz geometrischer Abmessungen des Stapels (10), vorzugsweise quer zur Stapelrichtung (30), und/oder eine oder mehrere magnetische Eigenschaften des Stapels (10), insbesondere eine magnetische Sättigungsfeldstärke und/oder Parameter einer Hysteresekurve, vorzugsweise eine Koerzitivfeldstärke und/oder eine Remanenz des Stapels (10).

5. Verfahren nach einem der vorhergehenden Ansprüche, bei welchem die Stapelfolge für eine echte Teilmenge der Mehrzahl von Magnetblechen (20) ermittelt wird.

6. Verfahren nach einem der vorhergehenden Ansprüche, bei welchem die Stapelfolge ermittelt wird, indem zunächst zumindest zwei oder mehrere Kandidatenstapelfolgen für eine Stapelfolge bestimmt werden und Istwerte der Kandidatenstapelfolgen mit dem Sollwert verglichen werden und diejenige Kandidatenstapelfolge als Stapelfolge ermittelt wird, deren Istwert am geringsten vom Sollwert abweicht.

7. Verfahren nach einem der vorhergehenden Ansprüche, bei welchem die Ermittlung der Stapelfolge mittels künstlicher Intelligenz erfolgt.

8. Verfahren nach einem der vorhergehenden Ansprüche, bei welchem eine geometrische Gestalt des Stapels erfasst wird und eine geometrische Gestalt einer Stapelhilfe (50) ermittelt wird, mittels welcher die Magnetbleche (20) in der ermittelten Stapelfolge stapelbar sind.

9. Verfahren nach einem der vorhergehenden Ansprüche, bei welchem Anpassungs- und/oder Austauschelemente zur Anpassung des Istwerts an den Sollwert vorgesehen werden und bei welchem die Stapelfolge unter Berücksichtigung der Anpassungs- und/oder Austauschelemente derart ermittelt wird, dass eine Abweichung eines Istwerts der physikalischen Größe des Stapels (10) mit der ermittelten Stapelfolge mit den Anpassungs- und/oder Austauschelementen von dem mindestens einen Sollwert verringert wird.

10. Verfahren nach einem der vorhergehenden Ansprüche, bei welchem die Anpassungs- und/oder Austauschelemente mittels additiver Fertigung gefertigt werden.

11. Verfahren nach einem der vorhergehenden Ansprüche, bei welchem die Stapelhilfe (50) mittels additiver Fertigungsverfahren gefertigt wird und der Stapel mittels der Stapelhilfe gestapelt wird.

12. Verfahren nach einem der vorhergehenden Ansprüche, bei welchem die Magnetbleche (20) gestapelt und miteinander verpresst werden.

13. Verfahren nach einem der vorhergehenden Ansprüche, bei welchem die Magnetbleche (20) abwechselnd gestapelt und miteinander verpresst werden.

14. Verfahren zur Fertigung einer elektrischen Maschine (520), bei welchem ein Rotor (500) und/oder Stator (510) mit einem Stapel (10) von Magnetblechen (20) gebildet wird, wobei der Stapel (10) von Magnetblechen (20) mit einem Verfahren zur Fertigung eines Stapels (10) von Magnetblechen (20) nach einem der vorhergehenden Ansprüche gefertigt wird.

15. Verfahren zur Fertigung einer Anlage (540) und/oder eines Fahrzeugs, bei welchem zunächst eine elektrische Maschine (520) mit einem Verfahren zur Fertigung einer elektrischen Maschine (520) nach dem vorhergehenden Anspruch gefertigt wird und anschließend die Anlage (540) oder das Fahrzeug mit der elektrischen Maschine (520) versehen wird.
